# FASCICULE DE BREVET EUROPEEN

(11) **EP 0 820 119 B1**
(45) Date de publication et mention de la délivrance du brevet: **03.11.1999**
(21) Numéro de dépôt: 97401665.1
(22) Date de dépôt: 10.07.1997
(51) Int. Cl.: H01R 9/07

(54) **Installation d'alimentation de dispositifs électriques sur des pavillons de véhicules**
Installation der Stromversorgung elektrischer Verbraucher an Fahrzeugdächern
Installation of power supply for electric devices on vehicle ceilings

(30) Priorité: 16.07.1996 FR 9608863
(43) Date de publication de la demande: 21.01.1998
(73) Titulaire: Société Anonyme SYLEA, 78190 Montigny le Bretonneux (FR)
(72) Inventeur: Capitaine, Patrick, 92500 Rueil Malmaison (FR)
(74) Mandataire: Faber, Jean-Paul

(56) Documents cités:
- DE-A- 2 904 246
- DE-A- 3 108 858
- US-A- 4 640 561
- US-A- 5 324 203

## Description

La présente invention se rapporte à l'alimentation électrique de dispositifs électriques disposés sur la surface interne de pavillon de véhicules.

L'invention se rapporte au montage des différents organes électriques prévus sur la surface interne des pavillons de véhicules automobiles, par exemple les plafonniers avant et arrière, le spot de lecture de carte, le récepteur électronique de fermeture centralisée des portières, etc... (Voir US-A-5 324 203).

Généralement, ces différents organes sont en saillie sur la garniture du pavillon, tandis que les conducteurs électriques, les connecteurs, etc... sont masqués par la garniture qui est collée sur ledit pavillon qui comporte, au moins, un connecteur avec une arrivée de courant.

Au moment de la pose de la garniture, on doit, par conséquent, réaliser le branchement ce qui est difficile et peu accessible.

La présente invention a notamment pour but de faciliter le montage.

L'installation, selon l'invention, est destinée à l'alimentation de dispositifs électriques sur des pavillons de véhicules automobiles, par exemple, des plafonniers, spots, éclairage de miroir, dispositif de commande centralisée de la fermeture des portières, etc... et comprend au moins, un connecteur électrique pourvu d'organes de contacts électriques destinés à être reliés par des conducteurs à une source de courant électrique, et le pavillon étant destiné à recevoir une garniture sur laquelle sont montés les différents dispositifs électriques, ladite installation étant caractérisée en ce que la garniture comprend, prémontés et précâblés, les différents dispositifs électriques qui sont formés d'au moins deux dispositifs comportant, chacun, une série de broches qui constituent des organes de liaisons électriques, les broches des deux dispositifs recevant des oeillets de nappes de conducteurs tels que des circuits imprimés qui forment le précâblage et les broches de l'un desdits dispositifs étant destinés à être fixés aux organes de contacts électriques du connecteur électrique et des moyens étant prévus pour isoler électriquement les broches de l'autre dispositif. Grâce à cette disposition, la pose de la garniture est simplifiée puisqu'il suffit de relier électriquement les broches du dispositif correspondant au connecteur et de fixer la garniture au pavillon.

Suivant un premier mode de réalisation, les organes de contacts électriques des connecteurs sont constitués par des rondelles comportant radialement des pattes de sertissage de conducteurs électriques, les broches comportant, à leur extrémité libre, des fentes afin qu'après engagement dans les rondelles on puisse effectuer un rivetage.

Suivant une variante de réalisation, l'installation comporte un carter pourvu de moyens pour sa fixation dans une ouverture de la garniture et destiné à recevoir un boîtier d'un dispositif électrique, ledit carter présentant un fond percé d'une première série de trous destinés à être traversés par les broches du boîtier et une seconde série de trous destinés à être traversés par des broches de plots de dérivation.

Afin que les circuits imprimés restent dans la position correspondant aux alimentations des différents dispositifs, l'installation comporte des plaquettes de fixation destinées à être montées sur les broches pour maintenir les oeillets engagés sur lesdites broches.

De préférence, les plaquettes de fixation comportent des moyens pour leur fixation sur le carter.

Suivant une caractéristique particulière, les moyens pour isoler électriquement les broches de l'autre dispositif comprennent une plaquette de fixation destinée à être montée sur les broches pour assurer le maintien des oeillets sur lesdites broches et fermée par un capuchon masquant lesdites broches.

Suivant une caractéristique constructive, les plaquettes de fixation sont réalisées en une matière plastique isolante dans laquelle sont en partie noyées des barrettes métalliques élastiques percées d'un trou pour le passage des broches, lesdits trous étant circonscrits par une gorge, le diamètre des trous étant légèrement inférieur à la section des broches et au moins une fente radiale étant pratiquée dans lesdites barrettes élastiques et débouchant dans les trous.

Suivant une autre caractéristique constructive, les plaquettes de fixation des oeillets sur les broches de l'autre dispositif et comportant un capuchon masquant les broches sont réalisées en matière plastique isolante, des barrettes métalliques élastiques étant, en partie, noyées dans la matière plastique et présentant un trou pour le passage des broches, circonscrit par une gorge, le diamètre du trou étant légèrement inférieur à la section des broches et au moins une fente étant pratiquée radialement et débouchant dans le trou.

Suivant un mode de réalisation particulier, les organes de contacts électriques du connecteur électrique comportent des rondelles destinées à être traversées par les broches celles-ci étant, à leur extrémité libre, conformées de manière à être serties sur lesdites rondelles.

Suivant une variante de réalisation, le connecteur comporte des moyens de blocage des broches. Ainsi, les broches se calent automatiquement dans les organes de contacts électriques.

Suivant une caractéristique constructive, le connecteur comporte, en partie noyées, une série de rondelles élastiques présentant, chacune, une série de pattes délimitant un passage pour une broche, les pattes étant inclinées de manière à s'écarter élastiquement lors de l'engagement des broches et formant harpons pour s'opposer au retrait desdites broches.

Enfin, les organes de contacts électriques présentent une partie en forme de tronc de cône dont la grande base est tournée du côté des moyens de blocage des broches et dont la petite base ouverte présente un diamètre légèrement inférieur au diamètre des broches, ladite petite base comportant une fente radiale.

L'invention va maintenant être décrite avec plus de détails en se référant à des modes de réalisation particuliers donnés à titre d'exemple seulement et représentés aux dessins annexés, dans lesquels :

Figure 1 est une vue schématique montrant la pose de l'installation, selon l'invention.

Figure 2 est une vue en perspective éclatée montrant le montage de l'installation.

Figure 3 est une vue en coupe à plus grande échelle montrant le pavillon avec sa garniture et l'installation.

Figure 4 est une vue en perspective éclatée d'une variante de réalisation.

Figure 5 montre en coupe la pose du plafonnier sur le pavillon.

Figure 6 montre en perspective une variante d'une plaquette de fixation.

Figure 7 est une vue en coupe suivant la ligne 7-7 de la figure 6.

Figure 8 est une vue schématique en plan montrant une garniture de pavillon agencée prête à être collée sur un pavillon de véhicule.

Figure 9 est une vue en coupe à plus grande échelle suivant la ligne 9-9 de la figure 8.

Figure 10 est une vue en coupe suivant la ligne 10-10 de la figure 4.

Figure 11 est une vue en coupe suivant la ligne 11-11 de la figure 4.

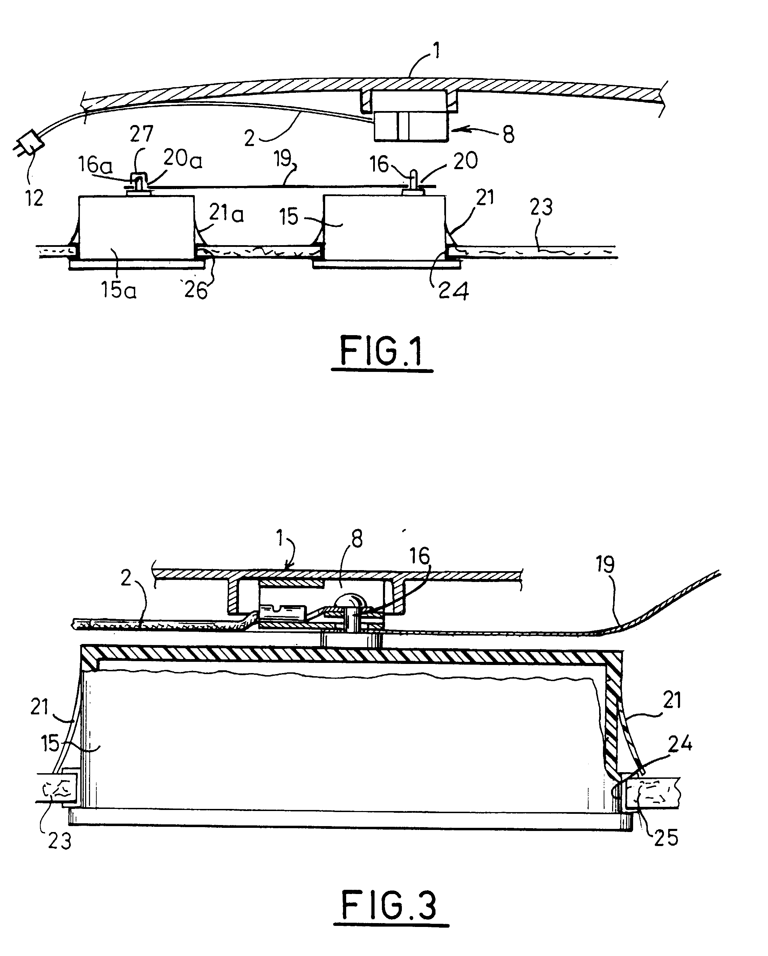

Aux figures 1 à 3, on a représenté un premier mode de réalisation.

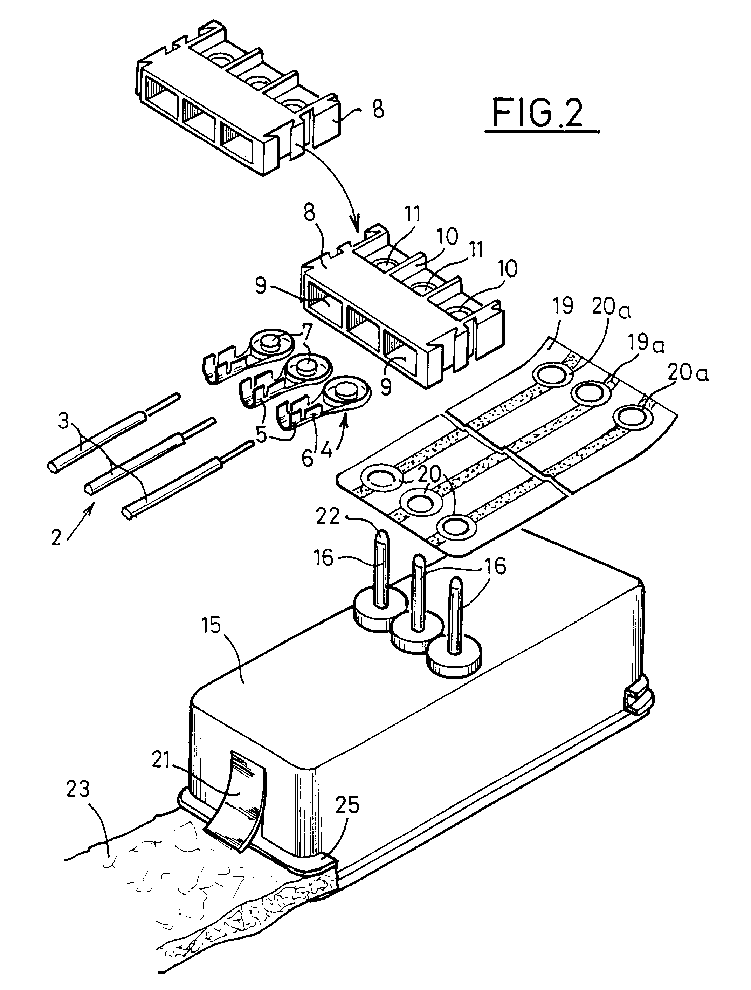

La face interne d'un pavillon de véhicule 1 est destiné à recevoir un faisceau 2 d'arrivée de courant pour l'alimentation de différents dispositifs électriques, plafonnier, spot ou autres dont les conducteurs 3 sont dénudés à une extrémité correspondante et reçoivent des organes de connexions électriques 4 pourvus de pattes de sertissage 5 et 6, les pattes 5 étant destinées à enserrer un conducteur 3 et les pattes 6 la partie dénudée, lesdits organes étant terminés par une rondelle 7 (voir figure 2).

Les organes 4 sont logés dans un connecteur isolant 8 comportant une série de voies 9 séparées par des cloisons 10, chaque voie comportant un trou 11 avec chacun desquels vient coïncider la rondelle 7. Les boîtiers sont modulaires et peuvent être assemblés les uns aux extrémités des autres. L'extrémité du faisceau 2, opposée à celle reliée au connecteur 8, comporte une prise 12 destinée à être branchée à une arrivée de courant.

Sur le boîtier d'un plafonnier 15 sont prévues des broches 16 reliées électriquement à une lampe d'éclairage, par exemple, avec interposition d'un interrupteur. La réalisation du plafonnier n'est pas représentée ici. Les broches 16 comportent, au voisinage de leur extrémité libre, une fente 22 pour permettre d'effectuer un épanouissement tel qu'un rivetage.

Sur les broches 16 s'engagent des oeillets 20 d'un circuit souple 19, chaque oeillet 20 étant serti sur une piste 19a s'il s'agit d'un circuit imprimé ou sur un conducteur, si on utilise des conducteurs en nappe.

L'autre extrémité du circuit imprimé 19 présente des oeillets 20a.

Sur une garniture 23 sont fixés, dans une ouverture 24, le boîtier 15 et, dans une ouverture 26, un boîtier 15a, ce dernier constituant, par exemple, le plafonnier arrière d'un véhicule, tandis que le boîtier 15 constitue le plafonnier avant. Le boîtier 15 comporte des pattes élastiques 21 permettant sa mise en place et sa retenue, une fois engagé dans l'ouverture 24, celle-ci étant bordée par un anneau serti 25.

Le boîtier 15a est monté de la même façon avec des pattes élastiques 21a dans l'ouverture 26 de la garniture 23 et comporte des broches 16a destinées à recevoir les oeillets 20a correspondants du circuit imprimé 19.

La garniture 23 est ainsi livrée avec les boîtiers 15 et 15a, le circuit imprimé 19 monté sur les broches 16 et 16a, un capuchon isolant 27 étant monté sur les broches 16a et les broches 16 engagées dans les rondelles 7 et rivetées à leur extrémité libre.

La garniture ainsi est ensuite collée sur le pavillon, tandis que la prise 12 est reliée à une source de courant convenable.

Ce mode de réalisation est un mode simplifié ne prévoyant que deux dispositifs électriques fixés au pavillon 1.

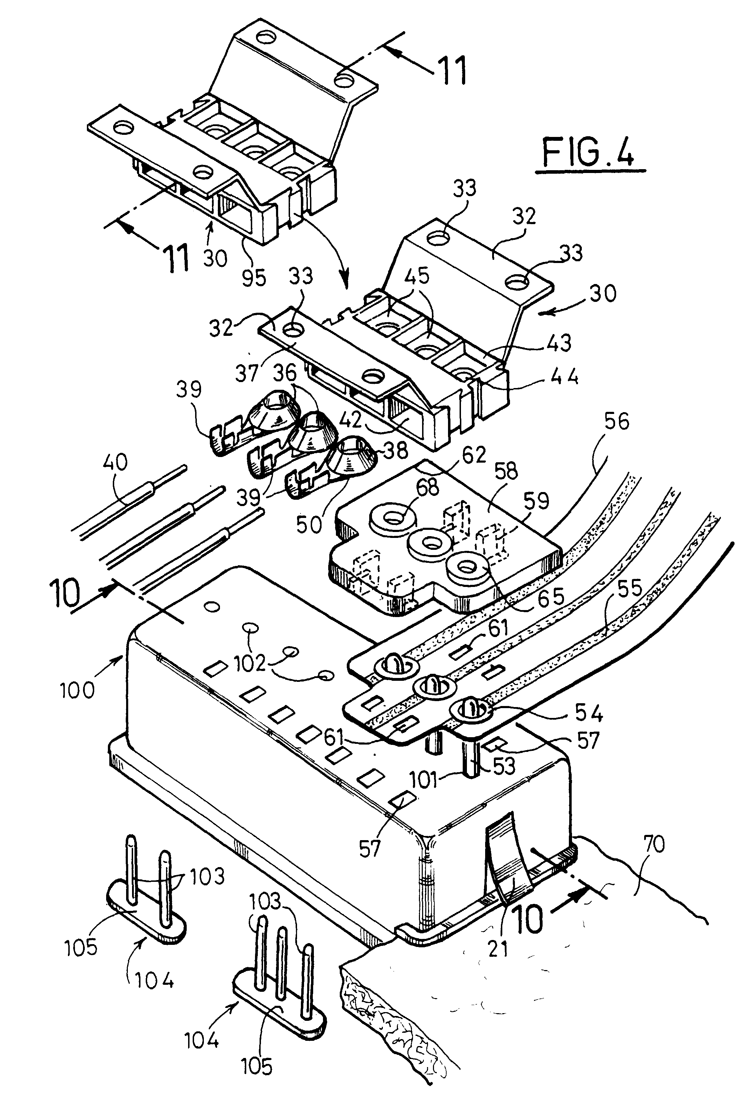

Aux figures 4 à 11, on a représenté une variante de réalisation de l'invention.

Dans ce mode de réalisation, sur le pavillon 29 sont fixés des connecteurs 30 comportant un corps 31 en matière isolante avec deux pattes 32 percées de trous 33 pour la fixation par des vis, rivets ou autres sur ledit pavillon 29.

Chaque connecteur 30 est d'un type modulaire c'est-à-dire qu'il peut être fixé, par une extrémité, à l'extrémité d'un autre. Dans le mode de réalisation représenté l'assemblage s'effectue par des queues d'arondes prévues auxdites extrémités.

Les connecteurs 30 reçoivent des organes de contacts électriques 36 présentant une partie en forme de tronc de cône 38 dont la petite base se termine par un évasement 37, cette partie 38 étant solidaire de pattes de sertissage 39 pour la fixation d'un conducteur électrique 40.

Les connecteurs 30 comportent des voies 42 s'ouvrant sur des logements 43 percés d'un trou 44 et dans lesquels s'étendent des organes 45 de blocage de la partie 38. Ces organes 45 présentent une ouverture enchassant la surface externe de la partie en forme de tronc de cône au droit du plus petit diamètre.

Dans chaque voie 42 est inséré un organe de contact électrique 36 dont la partie, en forme de tronc de cône 38, vient se situer au droit du trou correspondant 44. La partie en forme de tronc de cône 38 peut comporter une fente radiale 50.

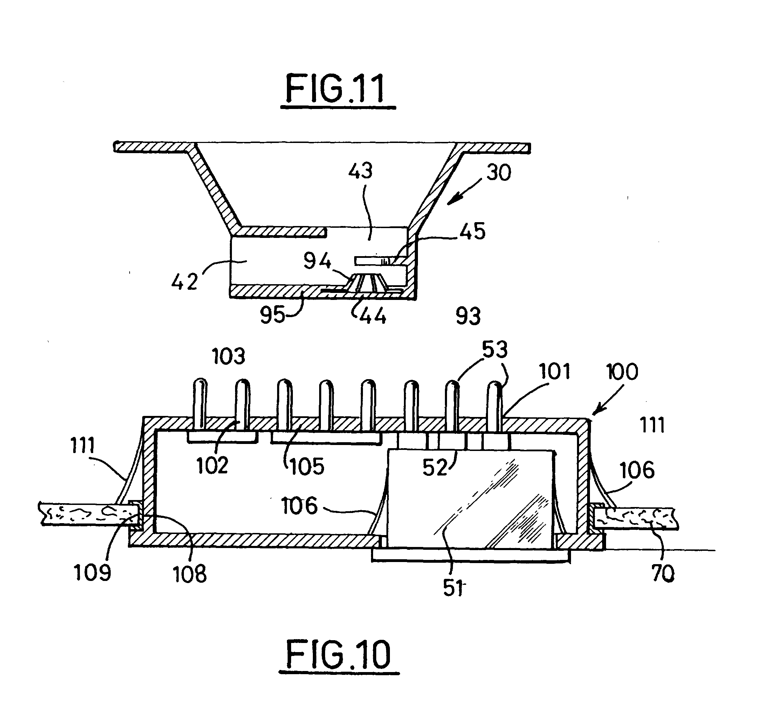

Dans la paroi inférieure 95 (voir figure 11) est noyée une rondelle élastique 93 comportant une série de pattes 94 inclinées vers l'organe de blocage 45. Ces pattes 94 forment harpons de sorte qu'un élément, engagé entre elles, ne peut plus être retiré.

Le boîtier d'un plafonnier 51 de forme générale parallélépipédique comporte un fond 52 à partir duquel s'érige une série de broches 53 destinées à recevoir des oeillets 54 solidaires des pistes 55 d'un circuit imprimé 56. Le circuit imprimé peut être remplacé par une nappe de conducteurs. Une partie des broches 53 est destinée à l'alimentation d'une lampe logée dans le boîtier de plafonnier 51 avec interposition d'un interrupteur. Cet aménagement du plafonnier n'est pas représenté ici. Le boîtier 51 est logé dans un carter 100 qui comporte des trous 101 pour le passage des broches 53 et des trous 102 destinés à être traversés par des broches 103 de plots de dérivation 104 formés d'une embase 105 en matière isolante à partir de laquelle s'érigent deux ou trois broches 103.

Le boîtier 51 comporte des pattes élastiques 106 permettant son engagement et sa fixation dans une ouverture 107 du carter 100.

Le carter 100 est fixé dans un trou 108 d'une garniture 70, le bord de l'ouverture étant renforcé par un anneau serti 109.

Le carter 100, latéralement, est pourvu de pattes élastiques 111 qui permettent son engagement dans l'ouverture 108 et s'oppose à son retrait une fois monté.

Les oeillets 54 sont maintenus sur les broches 53 par des plaquettes de fixation 58 formées d'un corps en matière plastique 62 avec, sur une face, des pattes élastiques 59 pourvues d'un crochet 60, celles-ci étant destinées à traverser des ouvertures 61 du circuit imprimé et des lumières 57 du carter 100, les crochets 60 en coopérant avec les bords des lumières 57, assurant la fixation.

Dans le corps 62 sont noyées des barrettes métalliques élastiques 64 présentant des trous 65 entourés d'une gorge 66. Chaque trou 65 et la gorge correspondante d'une barrette s'étendent en regard d'une ouverture 67 de la plaquette 58.

Il peut être prévu, dans chaque gorge 66, une fente 68 s'ouvrant dans le trou 65 afin de permettre une certaine déformation.

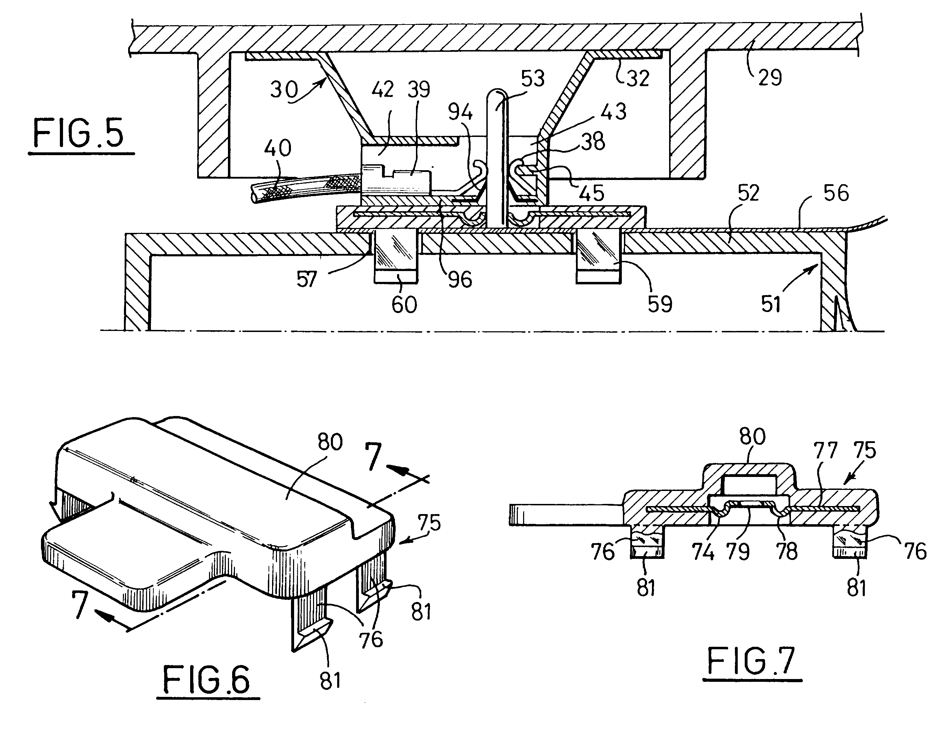

Aux figures 6 et 7, on a représenté une plaquette de fixation 75 qui est destinée à être utilisée avec certains dispositifs, par exemple, avec un plafonnier arrière d'un véhicule, un éclairage de miroir ou autre. Cette plaquette 75 est constituée par un corps en matière plastique moulée, avec des pattes de fixation 76 terminées par des crochets 81, lesdites pattes étant destinées à traverser les ouvertures 61 et des lumières 92 correspondantes desdits dispositifs.

Dans le corps sont noyées, au moulage, des barrettes métalliques élastiques 77 qui présentent, chacune, une gorge 78 circonscrivant un trou 79, les gorges étant situées au droit d'une ouverture 74 de la plaquette située du côté des pattes 76. Du côté opposé à celui pourvu des pattes, la plaquette de fixation présente un capuchon 80 destiné à recevoir les broches 53 et à les isoler électriquement. Les barrettes métalliques élastiques 77 comportant une fente radiale débouchant dans le trou 79.

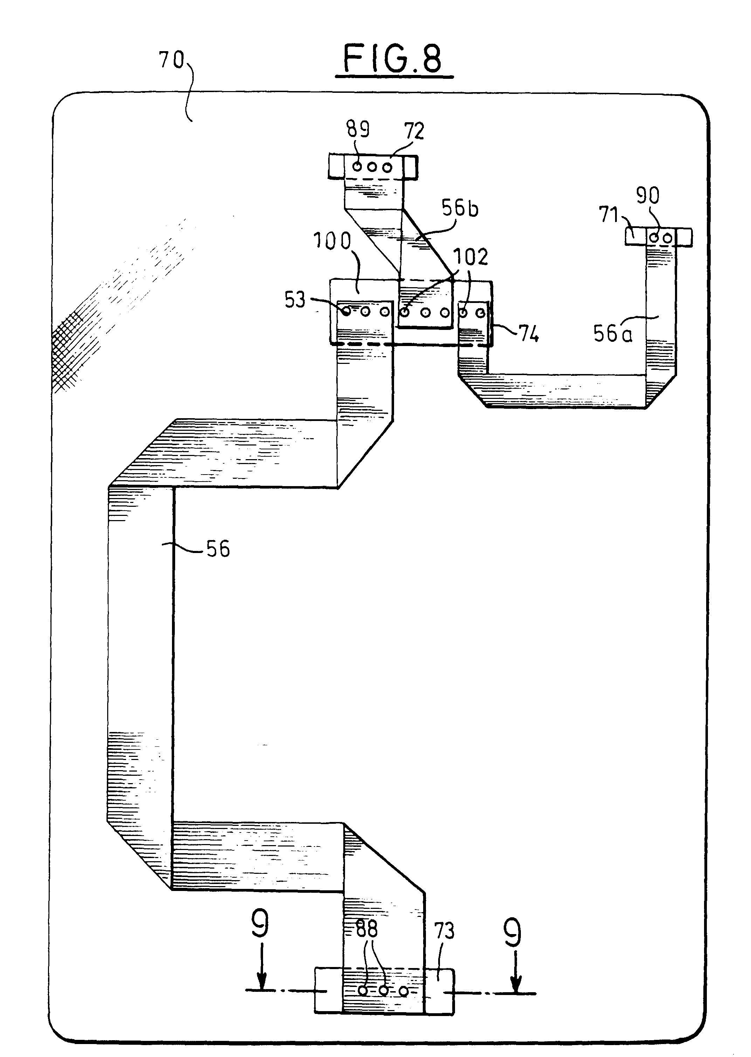

Sur la figure 8 on a représenté, schématiquement en plan, la garniture de pavillon 70 prête à être posée avec, sur sa face destinée à être collée sur le pavillon, des circuits imprimés souples 56, 56a et 56b.

Dans le mode de réalisation représenté en dehors du plafonnier 51, il est prévu un dispositif d'éclairage d'un miroir 71 situé en regard de la place avant droit du véhicule, un émetteur-récepteur électronique 72 de commande de la fermeture centralisée des portières, un plafonnier arrière 73, le plafonnier 51 pouvant comporter un spot de lecture 74. Les broches 53 du plafonnier 51 traversent les trous 101 du carter 100, les oeillets 54 étant montés sur les broches 53 et les plaquettes 58 étant engagées sur lesdites broches.

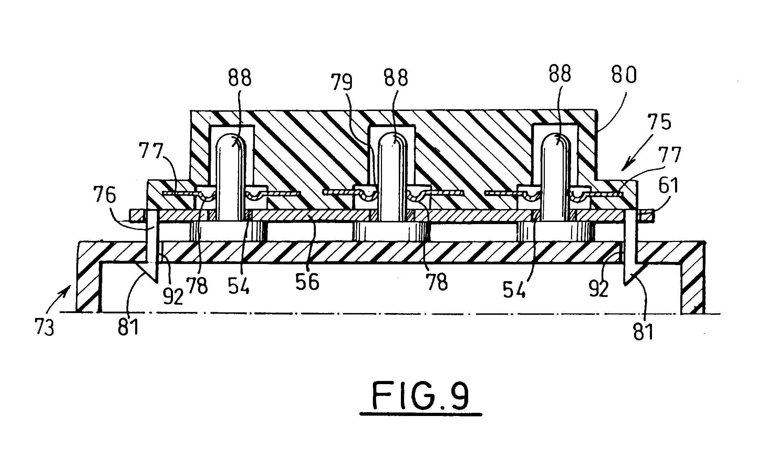

Le plafonnier arrière 73 comporte des broches 88 qui reçoivent les oeillets 54 du circuit imprimé correspondant, les broches recevant une plaquette de fixation 75 qui assure, d'une part, la fixation de l'extrémité correspondante du circuit imprimé, l'isolation électrique des broches 88, ses pattes 76 s'insérant dans les ouvertures 92 de celui-ci qui correspondent aux ouvertures 57 (voir figures 8 et 9).

Les trous 79, comme les trous 65, ont un diamètre légèrement plus petit que celui des broches 53 et 88 afin que celles-ci s'enfoncent à force et qu'ainsi, une fois engagées dans lesdits trous, elles ne puissent s'extraire intempestivement, les gorges 78 et 66 facilitant l'engagement des broches. Les trous 79 peuvent aussi comporter des fentes radiales.

L'émetteur-récepteur 72 est relié par un circuit imprimé 56b aux broches 103 d'un plot 104 et ledit émetteur comporte des broches 89 recevant une plaquette de fixation 75. Le montage est, par conséquent, le même que celui du plafonnier arrière 73.

La lampe d'éclairage du miroir 71 est alimentée par un circuit imprimé 56a interposé entre des broches 103 d'un second plot 104 et des broches 90 dudit dispositif, celui-ci étant fixé à la garniture 70 par une plaquette 75 qui assure également la fixation des oeillets du circuit imprimé. Ce montage correspond à ceux du plafonnier arrière 73 et de l'émetteur-récepteur 72.

A un endroit précis du pavillon 29 est fixé un connecteur 30 ou une série de connecteurs 30 assemblés bout à bout, ceux-ci recevant, dans les canaux 42, des organes 36 reliés par des conducteurs 40 à l'alimentation électrique, les contacts 36 étant calés dans les logements 43 par les organes 45. La garniture 70, pourvue des circuits imprimés 56, 56a et 56b des plafonniers, etc..., est présentée en regard de la surface correspondante du pavillon 29 dûment encollée de manière que les broches 53 traversent les rondelles 93 dont les pattes 94 assurent la fixation définitive et s'insèrent dans les parties en forme de tronc de cône 38 dont l'ouverture décrite par la petite base est légèrement plus petite que le diamètre des broches 53 de sorte que celles-ci s'enfoncent à force afin de réaliser une liaison électrique efficace. Les broches 102 sont engagées de la même façon dans les rondelles 93 et dans les parties en forme de tronc de cône 38. La garniture est fixée sur le pavillon simultanément. Ainsi, sans aucun outil on réalise, lors de la pose de la garniture, d'une part, les liaisons électriques et, d'autre part, le montage des circuits et des dispositifs électriques sur le pavillon.

Bien entendu, l'invention n'est pas limitée aux modes de réalisation qui viennent d'être décrits et représentés. On pourra y apporter de nombreuses modifications de détail sans sortir pour cela du cadre de l'invention.

## Revendications

1. Installation d'alimentation de dispositifs électriques sur des pavillons de véhicules automobiles, par exemple, plafonnier (15, 51), dispositif de commande centralisée de la fermeture des portières (72) etc..., avec au moins un connecteur électrique (8, 30) pourvu d'organes de contacts électriques (4, 36) destinés à être reliés par des conducteurs (3, 40) à une source de courant électrique et le pavillon étant destiné à recevoir une garniture (23, 70) sur laquelle sont montés les différents dispositifs électriques (15, 51), ladite installation étant caractérisée en ce que la garniture (23, 70) comprend, prémontés et précâblés, les différents dispositifs électriques qui sont formés d'au moins deux dispositifs comportant chacun une série de broches (16, 53, 88) qui constituent des organes de liaison électriques, les broches des deux dispositifs recevant des oeillets (20, 54) de nappes de conducteurs (19, 56) tels que des circuits imprimés qui forment le précâblage et les broches de l'un desdits dispositifs (51) étant destinées à être fixées aux organes de contacts électriques (4, 36) du connecteur électrique (8, 30) et des moyens (75) étant prévus pour isoler électriquement les broches (88) de l'autre dispositif (73).

2. Installation d'alimentation de dispositifs électriques, selon la revendication 1, caractérisée en ce que les organes de contacts électriques des connecteurs sont constitués par des rondelles (4) comportant radialement des pattes de sertissage de conducteurs électriques, les broches (16) comportant, à leur extrémité libre, des fentes (22) afin, qu'après engagement dans les rondelles (7), on puisse effectuer un rivetage.

3. Installation d'alimentation de dispositifs électriques, selon la revendication 1, caractérisée en ce qu'elle comporte un carter (100) pourvu de moyens (111) pour sa fixation dans une ouverture (108) de la garniture (70) et destiné à recevoir un boîtier (51) d'un dispositif électrique, ledit carter présentant un fond percé d'une première série de trous (101) destinés à être traversés par les broches (53) du boîtier et une seconde séries de trous (102) destinés à être traversés par des broches (103) de plots de dérivation (104).

4. Installation d'alimentation de dispositifs électriques, selon la revendication 1, caractérisée en ce qu'elle comporte des plaquettes de fixation (58) destinées à être montées sur les broches pour maintenir les oeillets engagés sur lesdites broches.

5. Installation d'alimentation de dispositifs électriques, selon les revendications 1 et 4, caractérisée en ce que les plaquettes de fixation (58) comportent des moyens (59, 60) pour leur fixation sur le carter (100).

6. Installation d'alimentation de dispositifs électriques, selon la revendication 1, caractérisée en ce que les moyens pour isoler électriquement les broches (88) de l'autre dispositif comprennent une plaquette de fixation (75) destinée à être montée sur les broches (88) pour assurer le maintien des oeillets (54) sur lesdites broches et fermée par un capuchon (80) masquant lesdites broches.

7. Installation d'alimentation de dispositifs électriques, selon la revendication 4, caractérisée en ce que les plaquettes de fixation (58) sont réalisées en une matière plastique isolante dans laquelle sont en partie noyées des barrettes métalliques élastiques (64) percées d'un trou (65) pour le passage des broches (53, 103), lesdits trous (65) étant circonscrits par une gorge (66), le diamètre des trous (65) étant légèrement inférieur à la section des broches et, au moins, une fente radiale étant pratiquée dans lesdites barrettes élastiques et débouchant dans les trous (65).

8. Installation d'alimentation de dispositifs électriques, selon la revendication 6, caractérisée en ce que les plaquettes de fixation (75) des oeillets (54), sur les broches (88) de l'autre dispositif et comportant un capuchon (80) masquant les broches, sont réalisées en matière plastique isolante, des barrettes métalliques élastiques (77) étant en partie noyées dans la matière plastique et présentant un trou (79) pour le passage des broches (88) circonscrit par une gorge (74), le diamètre du trou (79) étant légèrement inférieur à la section des broches (88) et au moins une fente étant pratiquée radialement et débouchant dans le trou (79).

9. Installation d'alimentation de dispositis électriques, selon la revendication 1, caractérisée en ce que les organes de contacts électriques (4) du connecteur électrique (8) comportent des rondelles destinées à être traversées par les broches, celles-ci étant, à leur extrémité libre, conformées de manière à être serties sur lesdites rondelles.

10. Installation d'alimentation de dispositifs électriques, selon la revendication 1, caractérisée en ce que le connecteur (30) comporte des moyens (93, 94) de blocage des broches (53, 103).

11. Installation d'alimentation de dispositifs électriques, selon la revendication 10, caractérisée en ce que le connecteur (30) comporte en partie noyées une série de rondelles élastiques (93) présentant, chacune, une série de pattes (94) délimitant un passage pour une broche (53, 103), les pattes étant inclinées de manière à s'écarter élastiquement lors de l'engagement des broches et formant harpons pour s'opposer au retrait desdites broches.

12. Installation d'alimentation de dispositifs électriques, selon les revendications 10 et 11, caractérisée en ce que les organes de contacts électriques présentent une partie en forme de tronc de cône (38) dont la grande base est tournée du côté des moyens de blocage des broches et dont la petite base ouverte présente un diamètre légèrement inférieur au diamètre des broches (53, 103), ladite petite base comportant une fente radiale (50).

## Patentansprüche

1. Einrichtung zur Stromversorgung elektrischer Einrichtungen an Fahrzeugdächern, wie Deckenleuchte (15,51), Steuervorrichtung (72) zur Zentralverriegelung von Türen u.dgl., mit zumindest einem elektrischen Verbinder (8,30), der mit elektrischen Kontaktorganen (4,36) versehen ist, die dazu vorgesehen sind, über Leiter (3,40) mit einer elektrischen Stromquelle verbunden zu werden, und wobei das Dach dazu vorgesehen ist, eine Verkleidung (23,70) aufzunehmen, an der die verschiedenen elektrischen Einrichtungen (15,51) angebracht sind, wobei genannte Einrichtung dadurch gekennzeichnet ist, daß die Verkleidung (23,70) die verschiedenen elektrischen Einrichtungen vormontiert und vorverkabelt enthält, welche aus zumindest zwei Einrichtungen gebildet sind, die jede eine Reihe von Kontaktstiften (16,53,88) aufweist, die elektrische Verbindungsorgane bilden, daß die Kontaktstifte der zwei Einrichtungen Kontaktösen (20,54) von Leiterbündeln (19,56), wie gedruckte Schaltungen, aufnehmen, die die Vorverkabelung bilden, und daß die Kontaktstifte der einen der genannten Einrichtungen (51) dazu vorgesehen sind, an elektrischen Kontaktorganen (4,36) des elektrischen Verbinders (8,30) befestigt zu werden und Mittel (75) vorgesehen sind, um die Kontaktstifte (88) der anderen Einrichtung elektrisch zu isolieren.

2. Einrichtung zur Stromversorgung elektrischer Einrichtungen nach Anspruch 1, dadurch gekennzeichnet, daß die elektrischen Kontaktorgane der Verbinder durch Ringscheiben (4) gebildet sind, die radiale Klemmlaschen für elektrische Leiter besitzen, daß die Kontaktstifte (16) an ihrem freien Ende Schlitze (22) aufweisen, damit man nach dem Eintreten in die Ringscheiben (7) eine Vernietung bewirken kann.

3. Einrichtung zur Stromversorgung elektrischer Einrichtungen nach Anspruch 1, dadurch gekennzeichnet, daß sie einen Kasten (100) aufweist, der mit Mitteln (111) für seine Befestigung in einer Öffnung (108) der Verkleidung (70) versehen und zur Aufnahme eines Gehäuses (51) einer elektrischen Einrichtung vorgesehen ist, daß genannter Kasten einen Boden besitzt, der durch eine erste Reihe von Löchern (101) durchzogen ist, die dazu vorgesehen sind, durch die Kontaktstifte (53) des Gehäuses durchgriffen zu werden, und eine zweite Reihe von Löchern (102) aufweist, die dazu vorgesehen sind, durch die Kontaktstifte (103) von Abzweigkontakten (104) durchgriffen zu werden.

4. Einrichtung zur Stromversorgung elektrischer Einrichtungen nach Anspruch 1, dadurch gekennzeichnet, daß sie Befestigungsplatten (58) aufweist, die dazu vorgesehen sind, auf den Kontaktstiften angebracht zu werden, um die Ösen mit den genannten Kontaktstiften in Eingriff zu halten.

5. Einrichtung zur Stromversorgung elektrischer Einrichtungen nach den Ansprüchen 1 und 4, dadurch gekennzeichnet, daß die Befestigungsplatten (58) Mittel (59,60) für ihre Befestigung am Kasten (100) aufweisen.

6. Einrichtung zur Stromversorgung elektrischer Einrichtungen nach Anspruch 1, dadurch gekennzeichnet, daß die Mittel zur elektrischen Isolierung der Kontaktstifte (88) der anderen Einrichtung eine Befestigungsplatte (75) aufweisen, die zur Anordnung auf den Kontaktstiften (88) zum Sicherstellen des Haltens der Ösen (54) auf den genannten Kontaktstiften vorgesehen und durch eine Haube (80) abgeschlossen ist, die die genannten Kontaktstifte überdeckt.

7. Einrichtung zur Stromversorgung elektrischer Einrichtungen nach Anspruch 4, dadurch gekennzeichnet, daß die Befestigungsplatten (58) aus einem isolierenden Kunststoffmaterial hergestellt sind, in dem federnde metallische Schienen (64) teilweise eingebettet sind, die von einem Loch (65) für den Durchgriff der Kontaktstifte (53, 103) durchzogen sind, daß die genannten Löcher (65) durch eine Rille (66) umgrenzt sind, wobei der Durchmesser der Löcher (65) etwas kleiner als der Querschnitt der Kontaktstifte ist, und daß zumindest ein radialer Schlitz in den genannten federnden Schienen ausgebildet ist und in die Löcher (65) mündet.

8. Einrichtung zur Stromversorgung elektrischer Einrichtungen nach Anspruch 6, dadurch gekennzeichnet, daß die für die Ösen (54) auf den Kontaktstiften (88) der anderen Einrichtung vorgesehenen Befestigungsplatten (75), die eine die Kontaktstifte überdeckende Haube (80) aufweisen, aus einem isolierenden Kunststoffmaterial hergestellt sind, daß federnde metallische Schienen (77) teilweise in das Kunststoffmaterial eingebettet sind und ein Loch (79) für den Durchtritt der Kontaktstifte aufweisen, welches durch eine Rille (74) umgrenzt ist, wobei der Durchmesser des Loches (79) etwas kleiner ist als der Querschnitt der Kontaktstifte (88), und daß zumindest ein Schlitz radial ausgebildet ist und in das Loch (79) mündet.

9. Einrichtung zur Stromversorgung elektrischer Einrichtungen nach Anspruch 1, dadurch gekennzeichnet, daß die elektrischen Kontaktorgane (4) des elektrischen Verbinders (8) Ringscheiben aufweisen, die dazu vorgesehen sind, durch die Kontaktstifte durchgriffen zu werden, die an ihrem freien Ende so ausgebildet sind, daß sie an den genannten Ringscheiben festgeklemmt werden.

10. Einrichtung zur Stromversorgung elektrischer Einrichtungen nach Anspruch 1, dadurch gekennzeichnet, daß der Verbinder (30) Mittel (93,94) zum Blockieren der Kontaktstifte (53,103) aufweist.

11. Einrichtung zur Stromversorgung elektrischer Einrichtungen nach Anspruch 10, dadurch gekennzeichnet, daß der Verbinder (30) eine Reihe von teilweise eingebetteten, federnden Ringscheiben (93) aufweist, die jede eine Reihe von Laschen (94) besitzen, die einen Durchgang für einen Kontaktstift (53,103) begrenzen, wobei die Laschen so geneigt sind, daß sie sich federnd beim Einsetzen der Kontaktstifte spreizen und Anker bilden, die dem Herausziehen der genannten Kontaktstifte entgegenwirken.

12. Einrichtung zur Stromversorgung elektrischer Einrichtungen nach den Ansprüchen 10 und 11, dadurch gekennzeichnet, daß die elektrischen Kontaktorgane einen Teil in Form eines Kegelstumpfes (38) aufweisen, dessen große Basis der Seite der Blockiermittel für die Kontaktstifte zugewandt ist und dessen kleine, offene Basis einen Durchmesser bildet, der etwas geringer ist als der Durchmesser der Kontaktstifte (53,103), wobei die genannte kleine Basis einen radialen Schlitz (50) aufweist.

## Claims

1. A power supply installation for electrical appliances on motor vehicle hoods, for example, ceiling lamp (15, 51) centralised control device for the closure of the doors (72), etc..., with at least one electrical connector (8, 30) provided with electrical contact members (4, 36) intended to be connected by wires (3, 40) to an electric current source and the hood being intended to receive a mounting (23, 70) on which the different electrical appliances (15, 71) are mounted, the said installation being
**characterised in that** the mounting (23, 70) comprises the preassembled and prewired different electrical appliances which are formed of at least two devices, each comprising a series of pins (16, 53, 88) which form electrical connection members, the pins of the two devices receiving studs (20, 54) of wire bundles (19, 56) so that printed circuits which form the prewiring and the pins of the one of the said devices (51) being intended to be fixed to the electrical contact members (4, 36) of the electrical connector (8, 30) and means (75) being provided to electrically insulate the pins (88) of the other device (73).

2. A power supply installation for electrical appliances, according to Claim 1,
**characterised in that** the electric contact members of the connectors are formed by washers (4) radially comprising crimping lugs for electric wires, the pins (16) comprising, at their free end, slots (22), so that, after engagement in the washers (7), rivetting can be performed.

3. A power supply installation for electrical appliances, according to Claim 1,
**characterised in that** it comprises a casing (100) provided with means (111) for its attachment in an aperture (108) of the mounting (70) and intended to receive a housing (51) of an electrical appliance, the said casing having a base pierced by a first series of holes (101), through which the pins (53) of the housing are intended to pass, and a second series of holes (102) through which pins (103) of connection blocks (104) are intended to pass.

4. A power supply installation for electrical appliances, according to Claim 1,
**characterised in that** it comprises attachment plates (58) intended to be mounted on the pins to keep the studs engaged on the said pins.

5. A power supply installation for electrical appliances, according to Claims 1 and 4,
**characterised in that** the attachment plates (58) comprise means (59, 60) for their attachment to the casing (100).

6. A power supply installation for electrical appliances, according to Claim 1,
**characterised in that** the means for electrically insulating the pins (88) of the other device comprise an attachment plate (75) intended to be mounted on the pins (88) to ensure the retention of the studs (54) on the said pins and closed by a cap (80) masking the said pins.

7. A power supply installation for electrical appliances, according to Claim 4,
**characterised in that** the attachment plates (58) are made from an insulating plastic material in which resilient metal bars (64) pierced with a hole (65) for the passage of the pins (53, 103) are partially embedded, the said holes (65) being circumscribed by a groove (66), the diameter of the holes (65) being slightly less than the section of the pins, and, at least, one radial slit being provided in the said resilient bars and opening into the holes (65).

8. A power supply installation for electrical appliances, according to Claim 6,
**characterised in that** the attachment plates (75) for the studs (54), on the pins (88) of the other device and comprising a cap (80) masking the pins, are made from insulating plastic material, resilient metal bars (77) being partially embedded in the plastic material and having a hole (79) for the passage of the pins (88) circumscribed by a groove (74), the diameter of the hole (79) also being slightly less than the section of the pins (88) and at least one slit being provided radially and opening into the hole (79).

9. A power supply installation for electrical appliances, according to Claim 1,
**characterised in that** the electric contact members (4) of the electrical connector (8) comprise washers through which the pins are intended to pass, said pins being shaped, at their free end, so as to be clinched onto the said washers.

10. A power supply installation for electrical appliances, according to Claim 1,
**characterised in that** the connector (30) comprises means (93, 94) for blocking the pins (53, 103).

11. A power supply installation for electrical appliances, according to Claim 10,
**characterised in that** the connector (30) comprises a series of partially embedded resilient studs (93), each having a series of lugs (94) delimiting a passage for a pin (53, 103), the lugs being inclined so as to deflect elastically upon the engagement of the pins and forming retaining clips to prevent the withdrawal of the said pins.

12. A power supply installation for electrical appliances, according to Claims 10 and 11,
**characterised in that** the electrical contact members have a portion shaped as a truncated cone (38), the large base of which is turned towards the locking means for the pins and the open small base of which has a diameter slightly smaller than the diameter of the pins (53, 103), the said small base comprising a radial slot (50).
